# EUROPEAN PATENT APPLICATION

(11) **EP 4 598 258 A1**
(43) Date of publication of application: **06.08.2025**
(21) Application number: 23870851.5
(22) Date of filing: 26.09.2023
(51) Int. Cl.: H04W 76/19

(54) **METHOD EXECUTED BY USER EQUIPMENT AND USER EQUIPMENT**

(30) Priority: 27.09.2022 CN 202211186847
(71) Applicant: Sharp Kabushiki Kaisha, Sakai City, Osaka 590-8522 (JP)
(72) Inventor: LIU, Renmao, Pudong, Shanghai 201206 (CN); LIU, Lei, Pudong, Shanghai 201206 (CN)
(74) Representative: Müller Hoffmann & Partner
(86) International application number: PCT/CN2023/121676
(87) International publication number: WO 2024/067623

(57) **Abstract**

The present invention provides a method performed by user equipment, and user equipment. The method includes: receiving, by the UE, a radio resource control (RRC) message transmitted by a base station, and when the RRC message includes a full configuration field, performing, by the UE, a full configuration procedure, a method used by the UE to perform full configuration including: if the RRC message includes a reconfigurationWithSync information element and the UE is acting as L2 U2N remote UE, adopting, by the UE, a default value for a timer T311.

## Description

### TECHNICAL FIELD

The present invention relates to the technical field of wireless communications. More specifically, the present invention relates to a method for full configuration in a sidelink relay architecture performed by user equipment, and corresponding user equipment.

### BACKGROUND ART

At the RAN#86 plenary meeting in December 2019, a study item on NR sidelink relaying of Release 17 was proposed (see Non-Patent Document: RP-193253, New Study Item on NR Sidelink Relaying), and was approved. Regarding the latest release of the study item, see Non-Patent Document: RP-201474, Revised SID: NR Sidelink Relay. The study item mainly studies the solution to user equipment (UE)-to-network and UE-to-UE relaying, so as to extend sidelink-based coverage. The goals of the study item include supporting a control plane procedure and service continuity.

At the RAN#91 plenary meeting in March 2021, a work item on NR sidelink relaying of Release 17 was proposed (see Non-Patent Document: RP-210904, New WID on NR Sidelink Relaying), and was approved. Regarding the latest release of the work item, see Non-Patent Document: RP-212601, Revised WID: NR Sidelink Relay. One of the goals of the work item is to standardize a sidelink control plane procedure, such as management of an RRC connection, reception of a system message, and reception of paging. The goals of the work item further include standardizing service continuity within the same base station, i.e., a switch from a direct connection between UE and a network to an indirect connection between the UE and the network through relay UE, and a switch from a connection between the UE and the network through the relay UE to a direct connection between the UE and the network.

At the RAN#94 plenary meeting in December 2021, a work item on NR sidelink relay enhancements of Release 18 was proposed (see Non-Patent Document: RP-213585, New WID on NR sidelink relay enhancements), and was approved. The goals of the work item include enhancing service continuity of sidelink relay, including: a switch from an indirect connection to an indirect connection within the same base station, and a switch from a direct connection to an indirect connection, a switch from an indirect connection to a direct connection, and a switch from an indirect connection to an indirect connection between base stations.

The present invention discusses a full configuration procedure performed after UE initiates RRC connection re-establishment while the UE is being configured with a path switch by a network and after the UE receives, while the UE is performing RRC resume, a message having a *fullConfig* (full configuration) indication.

### SUMMARY OF THE INVENTION

A method performed by user equipment (UE) according to a first aspect of the present invention comprises: receiving, by the UE, a radio resource control (RRC) message transmitted by a base station, and when the RRC message comprises a full configuration field, performing, by the UE, a full configuration procedure, a method used by the UE to perform full configuration comprising: if the RRC message comprises a *reconfigurationWithSync* information element and the UE is acting as L2 U2N remote UE, adopting, by the UE, a default value for a timer T311.

According to the method of the first aspect of the present invention, the RRC message received by the UE and transmitted by the base station is an RRC reconfiguration message or an RRC resume message.

According to the method of the first aspect of the present invention, in the case that the RRC message comprises the *reconfigurationWithSync* information element and the UE is acting as L2 U2N remote UE, if *ue-TimersAndConstantsRemoteUE* is comprised in SIB12 received by the UE, the value of a timer T301 comprised in *ue-TimersAndConstantsRemoteUE* comprised in SIB12 is used, otherwise, the value of a timer T301 in SIB1 received by the UE is used.

According to the method of the first aspect of the present invention, if the UE is not acting as L2 U2N remote UE, or the *reconfigurationWithSync* information element is not comprised in an *spCellConfig* information element, the UE applies a default MAC cell group configuration.

According to the method of the first aspect of the present invention, if the UE is not acting as L2 U2N remote UE, or the *reconfigurationWithSync* information element is not comprised in the *spCellConfig* information element, the UE establishes, for each *srb-Identity* comprised in *srb-ToAddModList,* an RLC entity for an SRB corresponding to *srb-Identity,* and/or applies a default SRB configuration for the corresponding SRB.

According to the method of the first aspect of the present invention, for each *srb-Identity* comprised in the *srb-ToAddModList,* the UE performs any one of the following actions for an SRB corresponding to srb-Identity: establishing an SL RLC entity; applying a default configuration of SL-RLC1; applying a default configuration of SL-RLC2; applying a default configuration of a PC5 relay RLC channel; applying a default configuration of a PDCP; establishing an SRAP entity; and applying a default configuration of an SRAP.

User equipment according to a second aspect of the present invention comprises: a processor; and a memory storing instructions, wherein the instructions, when run by the processor, perform any method according to the first aspect.

### Beneficial Effects of Present Invention

According to the present invention, a full configuration procedure may be correctly performed after UE initiates RRC connection re-establishment while the UE is being configured by a network to perform a path switch and after the UE receives, while the UE is performing RRC resume, a message having a *fullConfig* indication transmitted by the network, and configurations and parameter values of various layers may be correctly applied, thereby ensuring service normality and service continuity.

### BRIEF DESCRIPTION OF THE DRAWINGS

FIG. 1(a), FIG. 1(b), and FIG. 1(c) are schematic diagrams showing scenarios 1, 2, and 3 of UE-to-network relaying, respectively.
FIG. 2 is a diagram schematically showing control plane protocol stacks of a UE-to-network L2 architecture.
FIG. 3 is a schematic diagram showing a procedure of a path switch from an L2 UE-to-network direct path to an indirect path.
FIG. 4 is a schematic diagram showing a basic procedure of a method performed by user equipment according to Embodiment 1 of the invention.
FIG. 5 is a block diagram showing a user equipment according to an embodiment of the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP standards and specifications.
UE: User Equipment
NR: New Radio
MAC: Medium Access Control
MAC CE: MAC control element
RLC: Radio Link Control
SDAP: Service Data Adaptation Protocol
PDCP: Packet Data Convergence Protocol
RRC: Radio Resource Control
RRC_CONNECTED: RRC connected state
RRC_INACTIVE: RRC inactive state
RRC_IDLE: RRC idle state
RAN: Radio Access Network
Sidelink: sidelink
SCI: Sidelink Control Information
AS: Access Stratum
IE: Information Element
CE: Control Element
MIB: Master Information Block
NR: New Radio
SIB: System Information Block
NG-RAN: NG Radio Access Network
DCI: Downlink Control Information
ADAPT: adaptation layer
PHY: physical layer
RB: Radio Bearer
DRB: Data Radio Bearer
SRB: Signalling Radio Bearer
eDRX: Extended DRX
Uu: Uu
ProSe: Proximity based Services
V2X: Vehicle-to-Everything
NAS: Non-Access Stratum
PC5-S: PC5 signalling
SRAP: Sidelink Relay Adaptation Protocol
U2N: UE-to-Network
U2U: UE-to-UE
L2: Layer 2
RSRP: Reference Signal Received Power
SL-RSRP: Sidelink RSRP
SD-RSRP: Sidelink Discovery RSRP
RLF: Radio Link Failure
L2-ID: Layer-2 identity (ID)
PDCP: Packet Data Convergence Protocol

In the present invention, a network, a base station, and a RAN may be used interchangeably. The network may be a Long Term Evolution (LTE) network, a New Radio Access Technology (new RAT, NR) network, an enhanced Long Term Evolution (eLTE) network, or another network defined in a subsequent evolved version of the 3GPP.

In the present invention, user equipment (UE) may refer to an NR device that supports an NR sidelink relay function as described in the background art, may also refer to an NR device that supports an NR sidelink relay architecture, may also refer to remote UE, and may also refer to an NR device or an LTE device of another type. Remote UE may refer to UE connected to the network via U2N relay UE, or may refer to UE having execution capabilities of NR sidelink U2N remote UE. Relay UE may refer to UE that supports providing connectivity to the network for remote UE, or UE having the foregoing capability.

For a U2N scenario, "relay UE", "U2N relay UE", and "L2 U2N relay UE" are interchangeable. "Remote UE", "U2N remote UE", and "L2 U2N remote UE" are interchangeable.

In the present invention, sidelink and PC5 are interchangeable. "Feedback", "report", "reporting", "transmission", and "notification" are interchangeable. "Activation", "employing", "application", "enabling", "activating", "implementation", etc., are interchangeable.

In the present invention, "switch", "path switch", and "handover" are interchangeable. "Change" and "update" are interchangeable.

In the present invention, "path", "data path", and "connection" are interchangeable. In the present invention, "L2-ID" refers to a source L2-ID unless otherwise specified.

It should be noted that in the present specification, two items that are connected by "and", "or", or "and/or" may indicate different expression methods for the same intent in different application scenarios. It is possible that a relationship of including or being included in is present between the two items, and it is not necessary that the two items refer to completely different content.

Hereinafter, a description will be given of related art of the present invention.

A PC5 interface is an interface for performing control plane and user plane sidelink communication between UE and UE. For sidelink unicast, a PC5-RRC connection is an AS layer logical connection between a pair of a source L2-ID and a destination L2-ID. Establishment of one PC5 unicast link corresponds to establishment of one PC5-RRC connection. For the PC5 connection between the remote UE and the relay UE, the destination L2-ID of data transmitted by the remote UE is the source L2-ID of the relay UE, and the destination L2-ID of data transmitted by the relay UE is the source L2-ID of the remote UE.

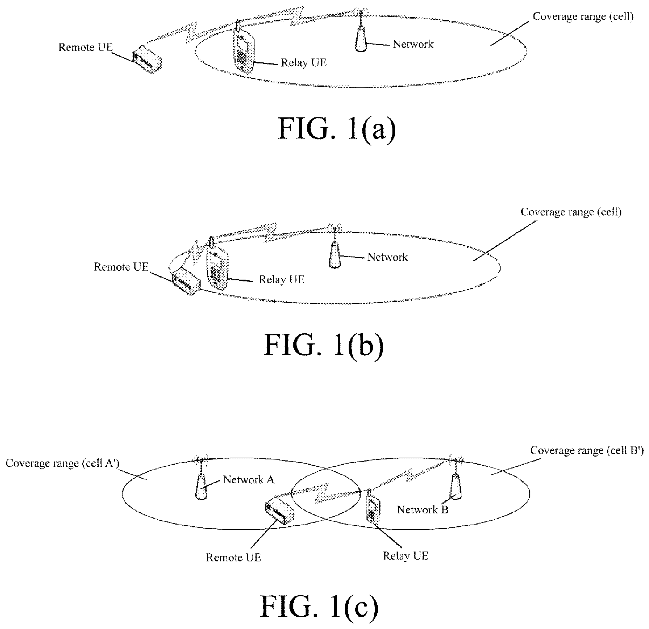

UE-to-network relaying is as shown in FIGs. 1(a), (b), and (c). In scenario 1 and scenario 2 of FIGs. 1(a) and (b), the left side is remote UE, the middle is relay UE, and the right side is a network. In scenario 3 of FIG. 1(c), both sides are networks (e.g., networks A and B), and the middle, from left to right, is remote UE and relay UE, respectively. The remote UE and the relay UE are connected to each other by means of a PC5 interface, and the relay UE is connected to the network by means of a Uu interface. Because the remote UE is far from the network or because the communication environment is poor, the relay UE is needed to relay and forward signaling and data between the remote UE and the network.

UE-to-network relay scenarios include:
1) the remote UE is out of coverage, and the relay UE is in coverage;
2) the remote UE and the relay UE are both in coverage, and are in the same cell; and
3) the remote UE and the relay UE are both in coverage, but are in different cells (e.g., cells A' and B').

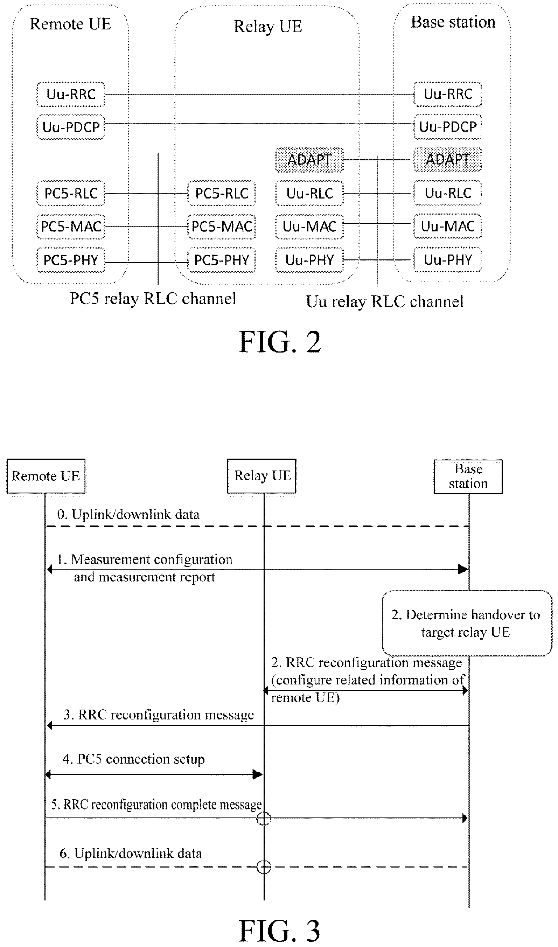

For a sidelink layer-2 (L2) relay architecture, control plane protocol stacks of remote UE, relay UE, and a base station are as shown in FIG. 2.

After the remote UE selects a relay UE to provide a relay service for the remote UE, the remote UE will establish a PC5-RRC connection to the relay UE, so as to communicate with the network by means of the relay UE. The remote UE may establish an air interface RRC connection to the network by means of the relay UE for data transmission between the remote UE and the network. The remote UE encapsulates, in PC5 messages/data, messages to the network such as air interface RRC connection establishment, re-establishment, and resume, and transmits the same to the relay UE. The PC5 message/data is borne on a PC5 relay RLC channel, and is submitted downwards layer by layer via PC5-MAC and PC5-PHY. Upon receiving the message, the relay UE submits the same upwards layer by layer via PC5-PHY and PC5-MAC. The relay UE finds, via a mapping relationship between a PC5 relay RLC channel and a Uu relay RLC channel, the Uu relay RLC channel bearing the message, encapsulates the message in a Uu message/data, and transmits the same to the network. In turn, an RRC message returned by the network is encapsulated by the base station in a Uu message/data so as to be transmitted to the relay UE. The relay UE finds, via a mapping relationship between a PC5 relay RLC channel and a Uu relay RLC channel, the PC5 relay RLC channel bearing the message, encapsulates the message in a PC5 message/data, and transmits the same to the remote UE.

### Path Switch

A connection set up for data transmission between UE and a network may be considered as a data path or a data connection. A connection of the UE to the network via a Uu interface may be considered a direct connection or a direct path. A connection of the UE to the network via relay UE may be considered an indirect connection or an indirect path. Connections of the UE to the network via different relay UEs may be considered different data paths. A data path change may be referred to as a path switch. The UE in the RRC_CONNECTED state may perform a path switch, and the path switch is initiated by the network. There are two types of path switches, i.e., intra-base station switches and inter-base station switches. Each type may be further divided into: a direct-to-indirect path switch, an indirect-to-direct path switch, and an indirect-to-indirect path switch.

A possible implementation procedure of the direct-to-indirect path switch is shown in FIG. 3. A network configures a measurement parameter for remote UE in the RRC_CONNECTED state directly connected thereto, and a relay related measurement object may be configured. The remote UE submits a measurement report to the network. The network refers to the measurement report to determine whether to switch the remote UE so that the remote UE is connected to the network via relay UE. Once the network determines target relay UE, the network prepares to initiate a path switch. The network configures, for the target relay UE via an *RRCReconfiguration* (RRC reconfiguration) message, parameters related to the remote UE, so that after the remote UE and the target relay UE set up a PC5 connection, the relay UE forwards an *RRCReconfigurationComplete* (reconfiguration is complete) message to a base station. The network transmits an *RRCReconfiguration* message to the remote UE, and the path switch is initiated by including an *sl-PathSwitchConfig* field in the message. The remote UE initiates PC5 connection setup to the target relay UE. Once the PC5 connection is set up, the remote UE transmits the *RRCReconfigurationComplete* message to the network. The message is forwarded to the network via the relay UE, and a path switch procedure is completed.

The procedure of the indirect-to-indirect path switch differs from that of the direct-to-indirect path switch as follows: The network configures a measurement parameter for the remote UE via the relay UE, and receives a measurement report of the remote UE via the relay UE. After the network determines to hand over the remote UE from the currently connected current relay UE to another target relay UE, the *RRCReconfiguration* message including the *sl-PathSwitchConfig* field is also transmitted to the remote UE via the current relay UE.

### Full Reconfiguration

During a handover procedure or after RRC connection re-establishment, the network may transmit an *RRCReconfiguration* message to the UE to trigger a handover or reconfigure a radio parameter. If the message may include a *fullConfig* field, it is indicated that full configuration is performed. If the message does not include the *fullConfig* field, it is indicated that delta configuration is performed.

During an RRC connection resumption procedure, the network may transmit an *RRCResume* message to the UE to resume an RRC connection. If the message may include a *fullConfig* field, it is indicated that full configuration is performed. If the message does not include the *fullConfig* field, it is indicated that delta configuration is performed.

Full configuration refers to releasing or clearing an original configuration, and reapplying each parameter configuration according to a network configuration. The delta configuration means that the original configuration is maintained, and addition, clearing, and modification may be performed for the original configuration.

Upon receiving the RRC message including the *fullConfig* field, the UE performs a full reconfiguration procedure. The full reconfiguration procedure may include, but is not limited to, the following steps:
- releasing or clearing current dedicated radio configurations except an SRB1/SRB2 configuration and a DRB configuration configured by a *radioBearConfig* information element; and
- if the RRC message includes the *reconfigurationWithSync* information element, releasing/clearing all current common radio configurations, and adopting default values specified by the protocol for timers T310 and T311 and constants N310 and N311;
- otherwise (i.e., the RRC message does not include
   *reconfigurationWithSyncspCellConfig,* which indicates that the full reconfiguration occurs after RRC connection re-establishment or during an RRC connection resumption procedure): if the UE is acting as L2 U2N remote UE, adopting the value configured in SIB1 for the timer T311, otherwise, adopting the values configured in SIB1 for all the timers T311, T301, and T310 and the constants N310 and N311.
- Applying a default MAC cell group configuration.
- The RRC message may include an *srb-ToAddModList* (SRB addition/modification list) information element, and each SRB is reconfigured by including *srb-Identity* (an SRB identity) in the list. For each srb-Identity included in the *srb-ToAddModList*: an RLC entity is established for a corresponding SRB, and a default SRB configuration is applied for the corresponding SRB.

The RRC message may include an *spCellConfig* information element, and the *reconfigurationWithSync* information element may be included in the *spCellConfig* information element.

A typical scenario discussed in the present invention is: operations and processing performed after the UE initiates RRC connection re-establishment while UE is being configured by a network to perform a path switch and after the UE receives, while the UE is performing RRC resume, a message having a *fullConfig* indication transmitted by the network.

Hereinafter, several embodiments of the present invention for addressing the above problems are described in detail.

### Embodiment 1

The present embodiment includes steps S101 and S103.

Optionally, in step S101, UE receives an RRC message (for example, but not limited to, an *RRCReconfiguration* message and an *RRCResume* message) transmitted by a network.

The RRC message received by the UE and transmitted by the network may be directly transmitted to the UE by the network, or may be forwarded to the UE (in this case, the UE is remote UE) by the network via relay UE.

Optionally, in step S103, if the message includes a *fullConfig* field, the UE, performs a full configuration procedure. If at least one of the following first conditions is satisfied, a default value specified by a protocol is employed for a timer T311:
- the UE is acting as L2 U2N remote UE;
- unless the UE is acting as L2 U2N remote UE;
- the RRC message includes a *reconfigurationWithSync* (reconfiguration with sync) information element;
- an *sl-PathSwitchConfig* (SL path switch configuration) information element is included in the *reconfigurationWithSync* information element;
- the *reconfigurationWithSync* (reconfiguration with sync) information element is included in an *spCellConfig* (SpCell cell configuration) information element; and
- the *reconfigurationWithSync* (reconfiguration with sync) information element is included in *spCellConfig* in *masterCellGroup* (master cell group).
*reconfigurationWithSync* may be included in the spCellConfig information element. *spCellConfig* may be included in the RRC message. *masterCellGroup* may be included in the RRC message.

Optionally, if at least one of the above first conditions is satisfied, the UE performs at least one of the following determinations and operations:
- if a *ue-TimersAndConstantsRemoteUE* (a timer and a constant of the remote UE) information element is included in SIB12 received by the UE, using the value of a timer T301 included in the *ue-TimersAndConstantsRemoteUE* information element included in SIB12; or
- otherwise, that is, the *ue-TimersAndConstantsRemoteUE* information element is not included in SIB12, using the value of a timer T301 in SIB1 received by the UE.

Optionally, the UE supports an L2 U2N path switch.

The timer T311 is started after the UE initiates an RRC re-establishment request message. If a suitable cell is selected or suitable L2 U2N relay UE is selected, the timer T311 is stopped. The RRC re-establishment request message is transmitted. The timer T301 is started. Re-establishment is performed upon reception of RRC re-establishment transmitted by the network.

### Embodiment 2

According to Embodiment 1, UE performs the full configuration procedure, and if the UE determines that at least one of the following second conditions is satisfied, the UE applies a default MAC cell group configuration:
- unless the UE is acting as L2 U2N remote UE;
- if the UE is not acting as L2 U2N remote UE;
- the RRC message does not include a *reconfigurationWithSync* (reconfiguration with sync) information element;
- the *reconfigurationWithSync* information element is not included in an *spCellConfig* (SpCell cell configuration) information element;
- the *reconfigurationWithSync* information element is not included in *spCellConfig* in *masterCellGroup* (master cell group);
- the RRC message includes the *reconfigurationWithSync* (reconfiguration with sync) information element, and the *sl-PathSwitchConfig* information element is not included in the *reconfigurationWithSync* information element;
- the *reconfigurationWithSync* information element is included in the *spCellConfig* (SpCell cell configuration) information element, and the *sl-PathSwitchConfig* information element is not included in the *reconfigurationWithSync* information element; and
- the *reconfigurationWithSync* information element is included in *spCellConfig* in *masterCellGroup* (master cell group), and the *sl-PathSwitchConfig* information element is not included in the *reconfigurationWithSync* information element.

Optionally, if the UE determines that at least one of the second conditions is satisfied, the UE establishes, for each *srb-Identity* included in the *srb-ToAddModList,* an RLC entity for a corresponding SRB, and/or applies a default SRB configuration for the corresponding SRB.

### Embodiment 3

According to Embodiment 1, the UE performs the full configuration procedure, which may further include the following operations:
for each *srb-Identity* included in the *srb-ToAddModList,* performing at least one of the following operations:
- establishing (an) SL RLC entity for an SRB corresponding to (*srb-Identity*);
- applying a default configuration of SL-RLC1 for the SRB corresponding to *(srb-Identity);*
- applying a default configuration of SL-RLC2 for an SRB corresponding to *(srb-Identity);*
- applying a default configuration of a PC5 relay RLC channel for the SRB corresponding to (*srb-Identity*);
- applying a default configuration of a PDCP for the SRB corresponding to *(srb-Identity*);
- establishing an SRAP entity (for the SRB corresponding to (*srb-Identity*)); and
- applying a default configuration of an SRAP (for the SRB corresponding to *(srb-Identity*))*.*

Optionally, the above operation is performed when the UE determines that at least one of the first conditions or the second conditions is satisfied.

In order to transmit and receive an RRC message on SRB 1 of the remote UE, the protocol specifies some parameters (which may be referred to as a default configuration of the protocol), and a PC5 relay RLC channel employing such a default configuration is referred to as SL-RLC1.

In order to transmit and receive an RRC message on SRB2 of the remote UE, the protocol specifies some parameters (which may be referred to as a default configuration of the protocol), and a PC5 relay RLC channel employing such a default configuration is referred to as SL-RLC2.

Optionally, the UE supports an L2 U2N path switch.

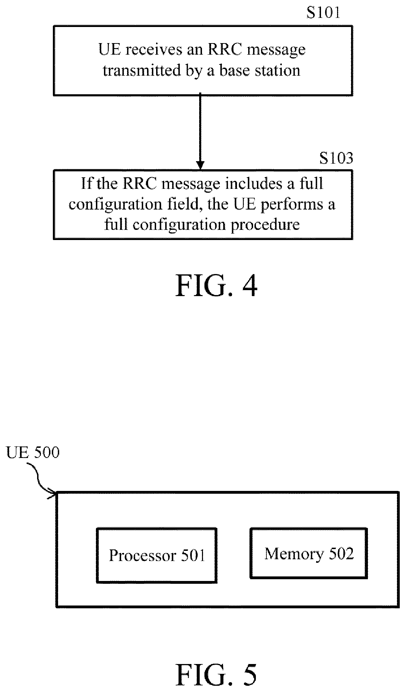

FIG. 5 is a simplified structural block diagram of user equipment (UE) according to the present invention. As shown in FIG. 5, the user equipment (UE) 500 includes a processor 501 and a memory 502. The processor 501 may include, for example, a microprocessor, a microcontroller, an embedded processor, and the like. The memory 502 may include, for example, a volatile memory (for example, a random access memory (RAM)), a hard disk drive (HDD), a non-volatile memory (for example, a flash memory), or other memories. The memory 502 has program instructions stored thereon. The instructions, when run by the processor 501, can perform the above method performed by user equipment described in detail in the present invention.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The so-called "computer system" may be a computer system embedded in the device, which may include operating systems or hardware (for example, peripherals). The "computer-readable recording medium" may be a semiconductor recording medium, an optical recording medium, a magnetic recording medium, a short-time dynamic memory program recording medium, or any other recording medium readable by a computer.

Various features or functional modules of the device used in the above embodiments may be implemented or executed via circuits (for example, monolithic or multi-chip integrated circuits). Circuits designed to execute the functions described in the present specification may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by user equipment (UE), comprising:
receiving, by the UE, a radio resource control (RRC) message transmitted by a base station, and when the RRC message comprises a full configuration field, performing, by the UE, a full configuration procedure,
a method used by the UE to perform full configuration comprising:
if the RRC message comprises a reconfiguration with sync information element and the reconfiguration with sync information element comprises an SL path switch configuration, adopting, by the UE, a default value for a timer T311.

2. The method according to claim 1, wherein,
the RRC message received by the UE and transmitted by the base station is an RRC reconfiguration message or an RRC resume message.

3. The method according to claim 1, wherein,
the method used by the UE to perform the full configuration further comprises:
determining, by the UE, whether the UE is acting as L2 U2N remote UE, and if the UE is not acting as L2 U2N remote UE, applying, by the UE, a default MAC cell group configuration.

4. The method according to claim 1, wherein,
the method used by the UE to perform the full configuration further comprises:
determining, by the UE, whether the UE is acting as L2 U2N remote UE, and if the UE is not acting as L2 U2N remote UE, establishing, by the UE for each *srb-Identity* comprised in *srb-ToAddModList,* an RLC entity for an SRB corresponding to *srb-Identity,* and/or applying a default SRB configuration for the corresponding SRB.

5. The method according to claim 1, wherein,
the method used by the UE to perform the full configuration further comprises:
for each *srb-Identity* comprised in *srb-ToAddModList,* performing, by the UE, any one of the following actions for an SRB corresponding to *srb-Identity*:
establishing an SL RLC entity; applying a default configuration of SL-RLC1;
applying a default configuration of SL-RLC2; applying a default configuration of a PC5 relay RLC channel; applying a default configuration of a PDCP; establishing an SRAP entity; and applying a default configuration of an SRAP.

6. The method according to claim 1, wherein,
the method used by the UE to perform the full configuration further comprises:
in the case that the RRC message comprises the reconfiguration with sync information element and the UE is acting as L2 U2N remote UE,
if a timer and a constant of remote UE are comprised in SIB 12 received by the UE, using the value of a timer T301 comprised in the timer and the constant of the remote UE comprised in SIB 12, otherwise,
using the value of a timer T301 in SIB1 received by the UE.

7. User equipment, comprising:
a processor; and
a memory storing instructions,
wherein the instructions, when run by the processor, perform the method according to any one of claims 1 to 6.
